# EUROPEAN PATENT SPECIFICATION

(11) **EP 2 194 010 B1**
(45) Date of publication and mention of the grant of the patent: **04.01.2012**
(21) Application number: 09175793.0
(22) Date of filing: 12.11.2009
(51) Int. Cl.: B65G 47/51

(54) **A dynamic buffer**
Dynamischer Puffer
Convoyeur tampon

(30) Priority: 04.12.2008 IT BO20080732
(43) Date of publication of application: 09.06.2010
(73) Proprietor: Marchesini Group S.p.A., 40065 Pianoro (Bologna) (IT)
(72) Inventor: Monti, Giuseppe, 40065, PIANORO (BOLOGNA) (IT)
(74) Representative: Dall'Olio, Giancarlo

(56) References cited:
- DE-A1- 2 426 679
- US-A- 3 499 555
- US-A- 5 735 380

## Description

The invention relates to a dynamic buffer according to the preamble of claim 1.

The simplest connecting system is constituted by a conveyor line which collects articles exiting from a first machine in order to transfer them to a second machine.

Located upstream and downstream of the conveyor line are handling organs (for example of the pick and place type, or robots or other besides) which are able to perform a transfer of the articles, respectively from the first machine to the conveyor line and from the conveyor line to the second machine.

The conveyor line can be constituted by a simple conveyor belt, or a box conveyor; alternatively trays can be provided, known to technical experts in the sector as godets, provided with seatings and formed in order to receive articles.

The use of trays, or godets, is preferred when the articles are fragile and/or of a particular shape and/or a predetermined orientation of the articles by the second machine which receives them downstream.

Independently of the conformation of the conveyor line, a constructional layout such as the one described herein above is rather rigid, in the sense that it is able to perform its tasks only under conditions of regular functioning of both the upstream and the downstream machines.

In many applications there is a need to make these systems more flexible, such that they can cope with temporary unforeseen functioning faults or brief halts of a machine without the other machine being affected.

In order to obtain the desired characteristics of flexibility, the connecting systems are from time to time provided with temporary storage devices known as buffers which are built according to the specific requirements of at least one or both the machines involved.

In a case in which the more "delicate" machine is upstream, the buffers are designed to house the articles coming from the machine when the downstream machine has problems.

Thereafter, once the regular functioning of the downstream machine has been resumed, the storage of articles in the buffer is progressively reduced, thanks to the fact that the machine is able to function at an operational speed which is greater than that of the upstream machine.

Certain types of products, for example pharmaceutical products, are damaged or altered if kept for too long in unsuitable conditions of temperature and/or of contact with air, with respect to what is expected for normal completion of the productive cycle.

A circumstance that can determine the faulty conditions obviously relates to the accumulation of the articles in a buffer and, in particular, the subsequent stage of emptying it. In order that all the stored articles stored in the buffer stay there for about the same length of time, the emptying has to start from the first article that entered it, i.e. in the same order in which the articles were introduced.

Document DE 2.426.679 discloses a dynamic buffer system according to the preamble of claim 1. A row of articles on a conveyer leading from a packing machine are normally pushed (by a pusher operated by cams) into a row of compartments of a vertical endless conveyer, and each article is then grasped by respective jaws of a moveable holder which then draws all the articles of the row on to a conveyer leading to a wrapping machine. If the latter machine is not operative, a sensor on the conveyer initiates a pulse to a stepping mechanism comprising a ratchet and pawl. This causes each row of articles to be lifted step-by-step on the conveyer instead of being drawn on to the conveyer. When the wrapping machine recommences, and/or when the packing machine is inoperative, the conveyer is stepped in the downwards direction, and rows of articles are successively drawn out on to the conveyer. The various operations are controlled by proximity switches. A switch switches off the packing machine when the number of rows of the conveyer filled with articles, reaches a predetermined number. A feeder mechanism checks the presence of articles in the rows of compartments, at the time of their feed-in or withdrawal.

The aim of the present invention is therefore to provide a dynamic buffer system, to be interposed between an upstream machine and a downstream machine, conformed such as to store articles coming from the upstream machine in a case of a brief pause in the downstream machine and which if needed can return the stored articles in the same order of introduction, in order to insert them in the downstream machine after it restarts.

A further aim of the invention consists in providing a dynamic buffer system in which the storage zone is capacious and at the same time compact.

A still further aim of the invention consists in providing a dynamic buffer system which is extremely versatile, such as to be easily configurable for loose articles, packed particles or articles to be treated together with relative conveyor trays (godets).

The aforementioned aims are obtained by means of a dynamic buffer system according to claim 1.

The characteristics of the invention will better emerge from the following description of a preferred embodiment of the dynamic buffer system in object, according to what is reported in the claims and with the aid of the accompanying tables of the drawings, in which:
figure 1 is a perspective view of the dynamic buffer system of the invention;
figure 2 is a perspective larger-scale view of a platform of a buffer conveyor as provided for the buffer of figure 1;
figure 3 is schematic plan view of the dynamic buffer of figure 1, in a normal functioning condition of the machines;
figure 4 is a lateral view of the storage conveyor relating to the condition of figure 3;
figure 5 is a similar view to that of figure 3 illustrated a halt conditions of the downstream machine;
figure 6 is a lateral view of the storage conveyor relating to the situation of figure 5;
figures 7A, 7B are plan views of successive first stages following the restarting of the downstream machine;
figures 8A, 8B are two lateral views of the storage conveyor in relation to the situations of figures 7A, 7B;
figures 9A, 9B, 9C are plan views of further stages, following the first stages, after the restarting of the downstream machine;
figures 10A, 10B, 10C are lateral views of the storage conveyor relating to the situations of figures 9A, 9B, 9C.

With reference to the figures of the drawings, 1 denotes the dynamic buffer system in object in its entirety.

The dynamic buffer 1 is associated to two conveyor lines L1, L2, the first of which L1 is supplied with articles 2 arriving from a first machines M1 and supplying, via the second line L2, a second machine M2 with the articles 2.

In the embodiment of the figures, the two lines L1, L2 are parallel and arranged in a line, but in reality they could be angled or off-axis.

The motorisation organs of the lines L1, L2 (not illustrated) are managed in a known way by a command and control unit K, in accordance with the operating situations of the machines M1, M2 as will be more fully described herein below.

The first conveyor line L1 is, for example, ring-closed and comprises a series of support elements 11, arranged in steps, which are destined to support the articles 2 along the operating branch RS, defined by the upper horizontal branch of the ring; at the end of the operating branch RS there is an unloading position A.

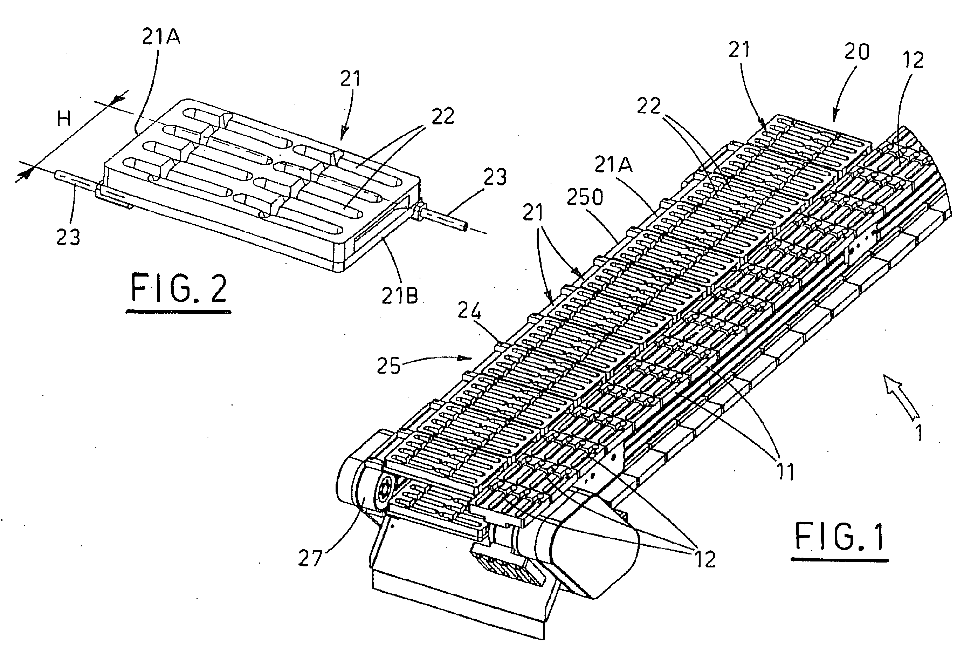

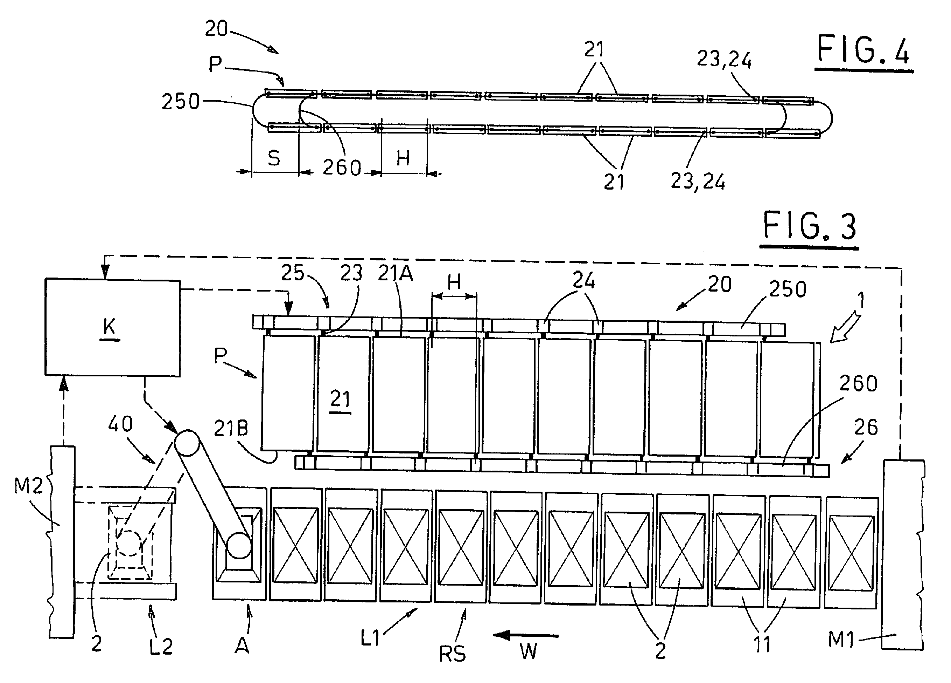

The support elements 11 can be constituted by conveyor trays (known as godets, figure 1) having shaped seatings 12 for the articles 2, or by little rest boards (figure 3 and following), or by further known organs, such as for example boxes and others.

A storage conveyor 20 is arranged by the side of the first line L1, also developing in a closed ring shape and comprising a series of platforms 21, arranged in steps, destined to support the articles 2.

In the example of the figures, which is not limiting, the storage conveyor 20 develops parallel to the first line L1.

The platforms 21 can exhibit shaped seatings 22 for the articles 2 (figures 1 and 2), for example in the presence of godets in the first line L1 (see figure 1), or they can be smooth as illustrated in figure 3 onwards.

The platforms 21 are each provided with a pair of pins 23, arranged with offset axes, with predetermined interaxis H and projecting from the relative opposite sides 21A, 21 B of the platforms 21 which pins 23 are parallel to the movement direction of the storage conveyor 20 (figure 2).

The pins 23 enable each platform 21 to be bilaterally engaged with corresponding bushes 24 arranged in steps along two flexible transmission organs 250, 260 (for example chains or cogged belts) provided respectively in two parallel movement groups 25, 26, destined to be activated in synchrony in a same direction by known-type motor organs which are not illustrated in detail, the activating of which is managed by the command and control unit K.

Each of the flexible transmission organs 250, 260 is ring-wound and closed between respective pairs of pulleys 27, of which only one is visible in figure 1; the organs 250, 260 exhibit a same trajectory and development, but the respective pairs of pulleys 27 are horizontally staggered by an amount S which is equal to the offset interaxis H of the pins 23 (see in particular figures 3 and 4).

This constructional solution enables the horizontal trim of the platforms 21 to be maintained unaltered along the whole development of the storage conveyor 20, comprising the curved connecting tracts between the two upper and lower horizontal branches; with an appropriate vertical distance between the branches it is possible to load all the platforms 21 present with relative articles 2, as well as to move the conveyor 20 in either direction.

An operating station P for inlet and outlet of articles is defined at an end of the upper horizontal branch of the storage conveyor 20, which operating station P is situated in proximity of the loading position A of the first line L1.

The buffer 1 further comprises handling organs 40, of the pick-and-place type, the activating of which is managed by the command and control panel K.

The handling organs 40 are arranged in a suitable intermediate position between the conveyor lines L1, L2 and the operating station P of the storage conveyor 20 (figures 3 and the like) and are destined to pick up the articles 2 arriving in the unloading position A in order to place them in the second line L2, or in order to move them onto corresponding platforms 21, progressively predisposed at the operating station P; the handling organs 40 are also destined to return the articles 2 stored in the storage conveyor 20 from the station P and return them into the second line L2.

In a constructional variant, not illustrated, first and second handling organs are provided in the place of the single handling organs 40 described herein above; in this case, the first handling organs, commanded and controlled by the unit K, perform only the transfer of the articles 2 from the first line L1 to the second line L2, while the second handling organs, also managed by the unit K, intervene, in suitable phase-relation with the first handling organs, in order to perform the transfer of the articles 2 from the first line L1 to the platform 21 of the storage conveyor 20, as well as thereafter to collect the articles 2 stored in the storage conveyor 20 and replace them in turn into the second line L2.

The details of the working modes of the above-described handling organs 40 are evident in the following description of the functioning of the dynamic buffer 1, in the case in which a logic control is preselected that realises the emptying of the storage conveyor 20 in the same order as an introduction of the articles 2 thereon.

Figure 3 illustrates a normal functioning condition of the second machine M2, in which the handling organs 40 cyclically perform the transfer of the articles 2 from the unloading position A of the first line L1 to the inlet of the second line L2.

In this condition, the storage conveyor 20 is inoperative, empty and can be kept stationary (figure 4).

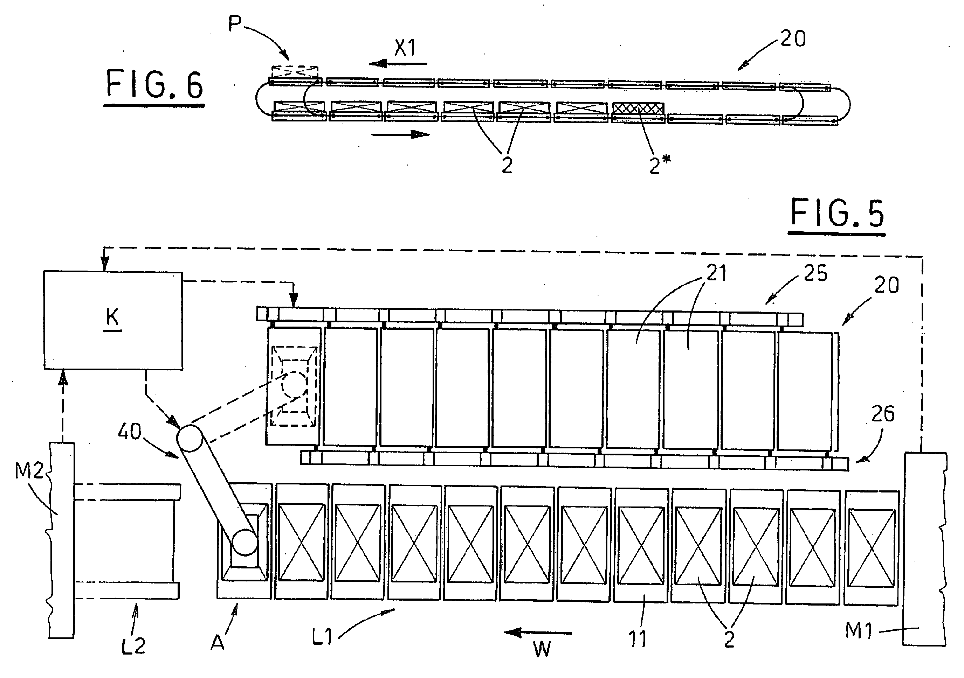

Figure 5 shows a consequent stage of the halting of the downstream machine; the handling organs 40 in this case cyclically pick up the articles 2 from the loading position A and transfer them onto the platforms 21, neared to the operating station P in a direction X1, for example a same direction as advancement direction W of the first line L1.

Figure 6 illustrates the articles 2 already stored in the lower branch of the storage conveyor 20, and a different broken line shows the first article 2* introduced following the halting of the downstream machine.

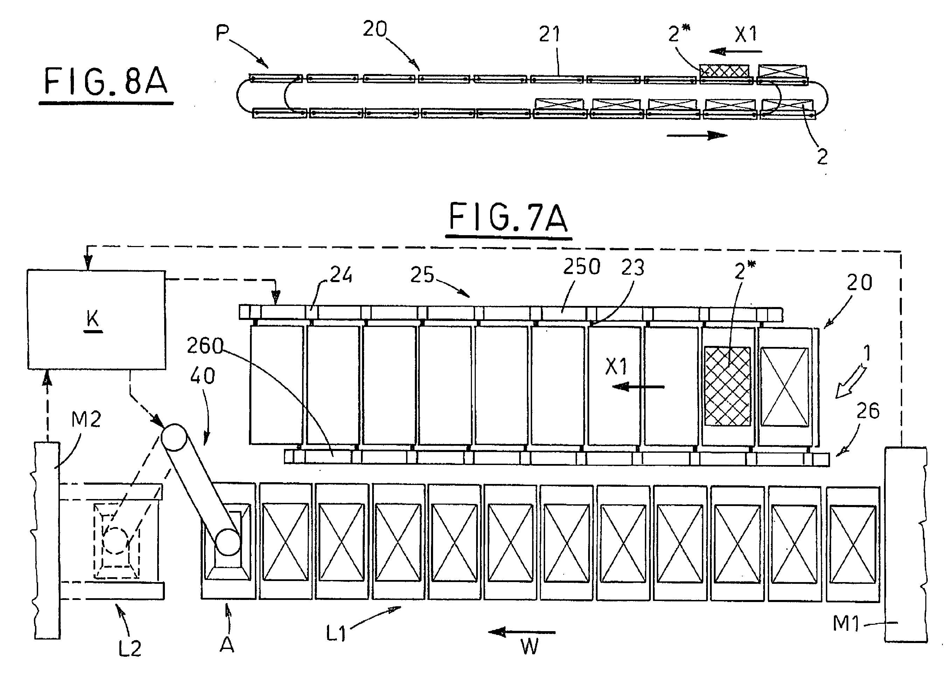

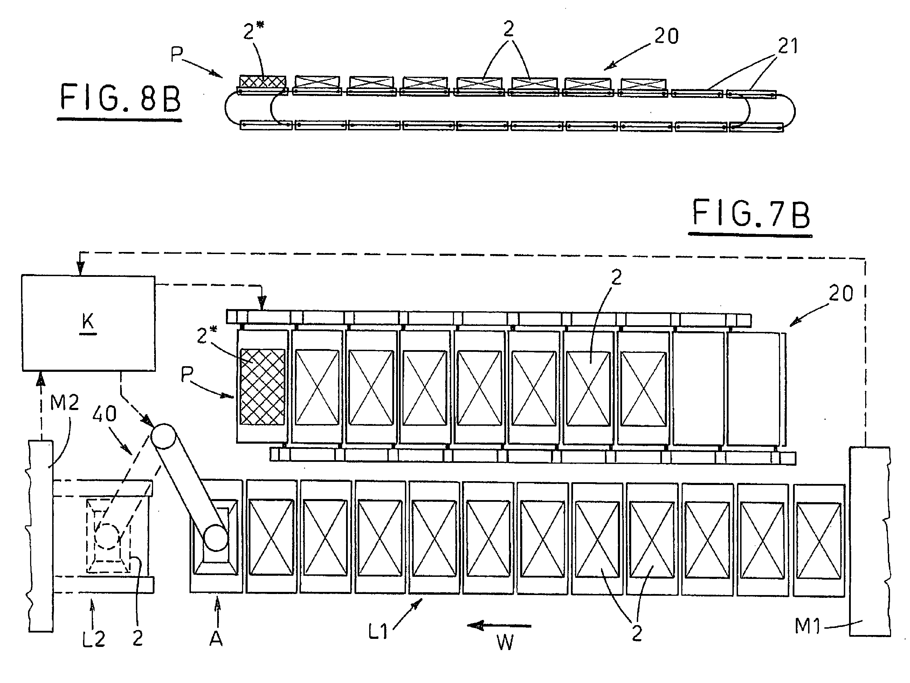

Figures 7A, 7B illustrate two successive stages immediately following the return to normal functioning of the downstream machine, in which the handling organs 40 have started transferring the articles 2 from the unloading position A to the second line L2.

In the meantime, the storage conveyor 20 is activated at top speed in the most advantageous direction, for example in direction X1, in order to bring the first article 2* as quickly as possible into the operating station P (see also figures 8A and 8B).

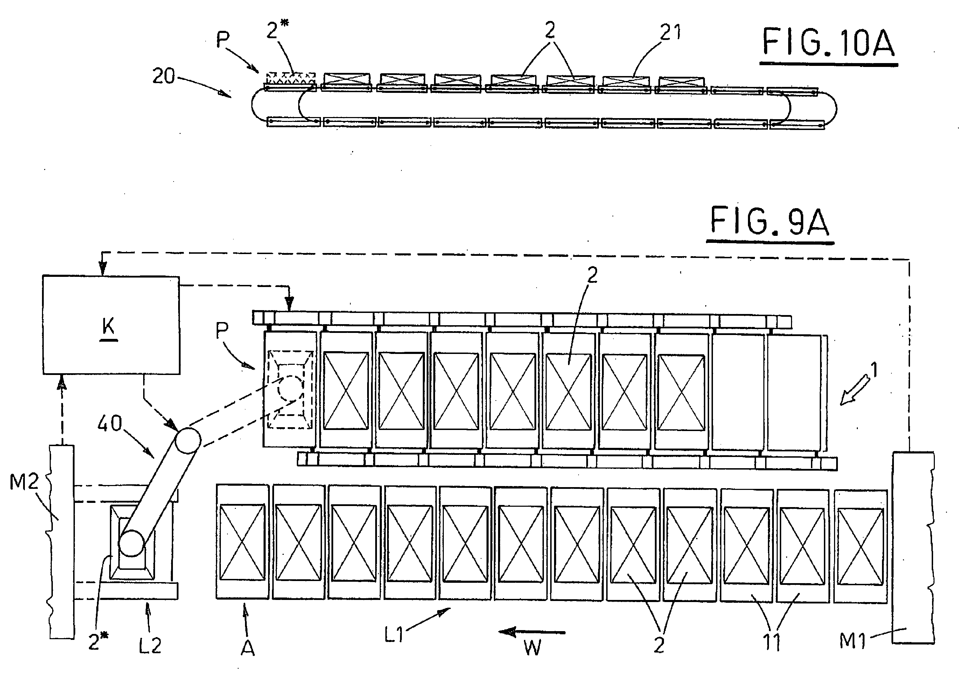

Figure 9A illustrates the stage in which the handling organs 40 pick up the first article 2* from the operating station P of the storage conveyor 20 (see also figure 10A) and deposit the first article 2* on the second conveyor line L2.

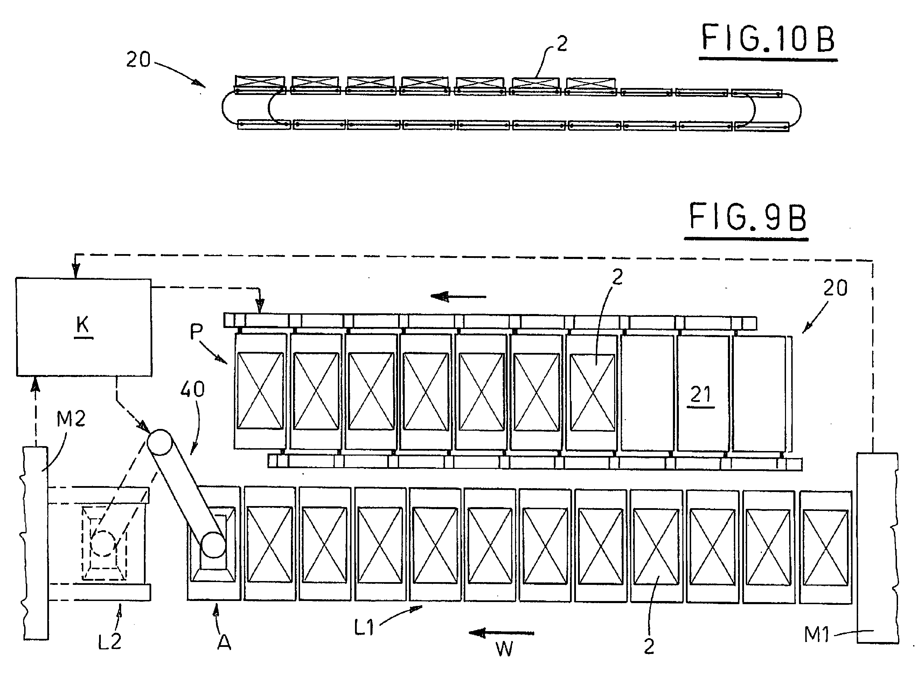

In special phase relation with the start of the above-described operation, the operating speed of the second machine M2 is appropriately accelerated, as is the relative conveyor line L2, and the speed of the handling organs 40; the handling organs 40 can pick up, for example alternatingly one by one, both the articles 2 stored in the storage conveyor 20 in the same order as the introduction thereof, and the articles 2 coming from the first machine M1 on the first line L1 (see figures 9B, 10B), in order to put them into the second line L2.

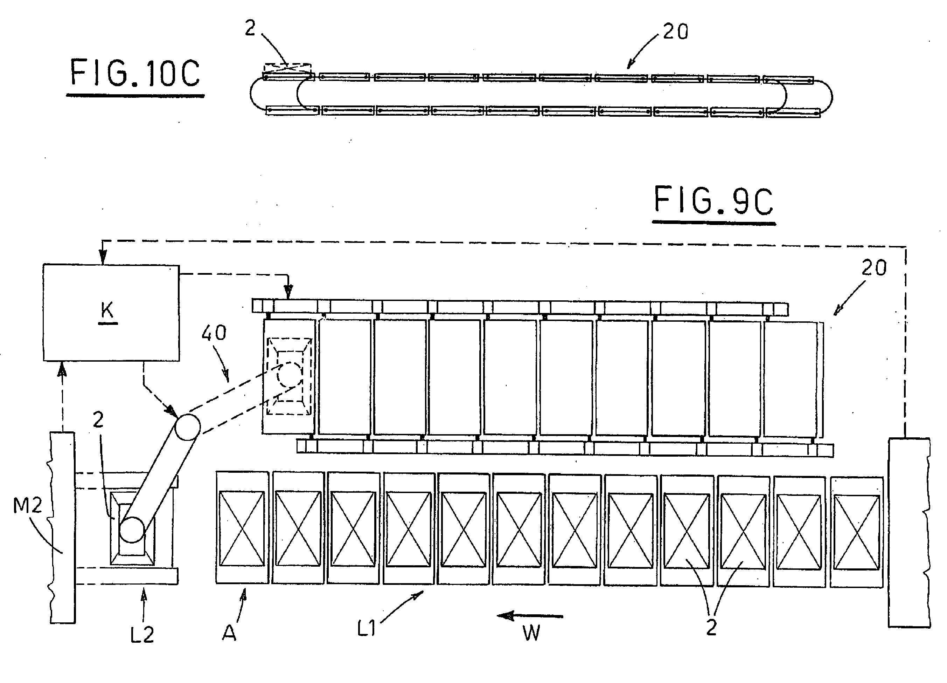

In order to absorb the increase in rhythm of the supply of articles 2, the acceleration of the second machine M2 carries on for the time needed to empty the storage conveyor 20 (figures 9C and 10C).

The dynamic buffer 1 is destined to intervene in a case in which the second machine M2 is merely slowed down, instead of halted, with a consequent reduction in productivity.

In this situation (not illustrated) the unit K commands the handling organs 40 such that a part of the articles 2 picked up from the unloading position A is inserted in the second line L2, compatibly with the ability to absorb of the second machine M2, while the excessive part is stored in the storage conveyor 20, in the way described herein above.

When full working productivity of the second machine M2 is restored, the command and control unit K accelerates the second machine M2 and commands the handling organs 40 in the above-described ways in order to empty the storage conveyor 20.

As mentioned in the preamble hereto, the fact of having two machines in line, with the downstream machine having a faster operating speed than the upstream machine, is to be considered of the prior art, being well known by the experts in the sector.

Obviously the dynamic buffer 1 as described herein above can function in a substantially similar way even without taking account of the introduction of the articles into the storage conveyor 20.

The capacity of the dynamic buffer 1 can obviously be changed by modifying the lengthwise development thereof, compatibly with any need to contain the stored articles 2 within a maximum time lapse.

The described dynamic buffer, then, fully attains the set aims, in particular in defining a storage buffer which if required can return the stored articles in the same order in which they were introduced.

The preferred embodiment, described for the storage conveyor, with the possibility of exploiting both upper and lower horizontal branches, and maintaining the platforms in constant trim, is a characteristic of great interest in obtaining the maximum capacity with the minimum volume.

A further advantage of the dynamic buffer system of the invention relates to the versatility offered for obtaining specific configurations for loose articles, packed articles or articles to be treated together with relative godets.

The above, however, is intended to be by way of example and non-limiting, the scope of protection of the invention being defined in the following claims.

## Claims

1. A dynamic buffer system comprising :
- a first conveyor line (L1) for conveying articles (2) supplied from a first machine (M1);
- a second conveyor line (L2) for supplying a second machine (M2) with the articles (2);
- a command and control unit (K) for managing the motorising organs of the two conveyor lines (L1, L2), and
- a dynamic buffer (1) associated to the two conveyor lines (L1, L2) ;
wherein the dynamic buffer (1) comprises :
- a buffer conveyor (20) constituted by a plurality of platforms (21) arranged in sequence along a ring-wound trajectory, with each of the platforms (21) being destined to receive at least an article (2);
- first handling organs (40) commanded and controlled by the command and control unit (K) in order to cyclically transfer the articles (2) from the first conveyor line (L1) to the second conveyor line (L2);
- second handling organs, commanded and controlled by the command and control unit (K), acting between an operating station (P) in which the platforms (21) of the buffer conveyor (20) transit and one or the other of the lines (L1, L2), wherein the second handling organs optionally coincide with the first handling organs (40);
wherein the command and control unit (K) manages the motorising organs of the conveyor lines (L1, L2), the activating of the motorising organ of the buffer conveyor (20) and the activating of the first and second handling organs in accordance with operating conditions of the machines (M1, M2);
**characterized in that** the second handling organs are of the type pick-and-place and **in that** the following operations are commanded and controlled by the command and control unit (K);
- during a reduction or a halting of a productivity of the second machine (M2) the second handling organs displace the articles (2) from the first line conveyor (L1) to corresponding platforms (21) of the buffer conveyor (20); and
- once productivity of the second machine (M2) has increased or returned to normal and in phase relation both with an activation of the first handling organs (40) and with an increase in velocity of the second conveyor line (L2), second handling organs pick-up the articles (2) from the platforms (21) in a predetermined order such as to place the articles (2) in the second conveyor line (L2) in a predetermined alternation with the articles (2) transferred from the first conveyor line (L1) onto the second conveyor line (L2) by the first handling organs (40), up to when the buffer conveyor (20) is completely evacuated.

2. The dynamic buffer system of claim 1, **characterised in that** the buffer conveyor (20) exhibits two superposed branches, respectively an upper branch and a lower branch, with the operating station (P) located at the upper branch.

3. The dynamic buffer system of claim 2, **characterised in that** the operating station (P) is situated at an end of the upper branch.

4. The dynamic butter system of claim 1, **characterized in that** the conveyor lines (L1, L2) are arranged aligned, and **in that** the buffer conveyor (20) exhibits two superposed branches, respectively an upper branch and a lower branch, which are parallel to the conveyor lines (L1, L2) and with the operating station (P) located at the upper branch.

5. The dynamic buffer system of claim 1 or 4, **characterised in that** the first handling organs (40) are interposed between an end of the first conveyor line (L1) and a start of the second conveyor line (L2).

6. The dynamic buffer system of any one of the preceding claims, **characterised in that** the first handling organs (40) coincide with the second handling organs.

7. The dynamic buffer system of claim 1, **characterised in that** the buffer conveyor (20) comprises two conveyor groups (25, 26) which are parallel and synchronically activatable in two directions, and which are positioned at opposite sides (21A, 21B) of the platforms (21), which platforms (21) are each provided with a pair of pins (23) arranged offset and projectingly from the sides (21A, 21B) thereof, and which pins (23) are apt to engage in corresponding bushings (24) arranged in steps along two flexible transmission organs (250, 260) provided respectively in the two conveyor groups (25, 26), the flexible transmission organs (250,260) being horizontally staggered by an amount (S) which is equal to an interaxis (H) between the pivots (23), in order to enable the horizontal trim of the platforms (21) to be kept unaltered for a whole development of the buffer conveyor (20), comprising curved connecting tracts between the relative horizontal upper and lower branches thereof.

## Patentansprüche

1. Dynamisches Puffersystem, Folgendes beinhaltend:
- eine erste Fördererlinie (L1) zum Befördern von Artikeln (2), die von einer ersten Maschine (M1) beschickt werden;
- eine zweite Fördererlinie (L2) zum Beschicken einer zweiten Maschine (M2) mit den Artikeln (2);
- eine Befehls- und Steuereinheit (K) zur Verwaltung der Antriebsorgane der zwei Fördererlinien (L1, L2); und
- einen dynamischen Puffer (1), der mit den zwei Fördererlinien (L1, L2) verbunden ist; worin der dynamische Puffer (1) beinhaltet:
- einen Pufferförderer (20), der aus mehreren Plattformen (21) besteht, die aufeinander folgend entlang einer ringförmig geschlossenen Bahn angeordnet sind, wobei jede der Plattformen (21) dafür ausgelegt ist, zumindest einen Artikel (2) zu empfangen;
- erste Handhabungsorgane (40), die von der Befehls- und Steuereinheit (K) angesteuert und kontrolliert werden, um die Artikel (2) zyklisch von der ersten Fördererlinie (L1) zu der zweiten Fördererlinie (L2) zu überführen;
- zweite Handhabungsorgane, die von der Befehls- und Steuereinheit (K) angesteuert und kontrolliert werden und die wirksam sind zwischen einer Arbeitsstation (P), in der die Plattformen (21) des Pufferförderers (20) durchlaufen, und der einen oder der anderen der Linien (L1, L2), worin die zweiten Handhabungsorgane optional mit den ersten Handhabungsorganen (40) übereinstimmen;
worin die Befehls- und Steuereinheit (K) die Antriebsorgane der Fördererlinien (L1, L2) verwaltet; wobei die Aktivierung des Antriebsorgans des Pufferförderers (20) und die Aktivierung der ersten und zweiten Handhabungsorgane in Abhängigkeit von den Betriebsbedingungen der Maschinen (M1, M2) erfolgt;
**dadurch gekennzeichnet, dass** die zweiten Handhabungsorgane vom Typ "Pick-and-Place" sind und dass die nachfolgenden Operationen von der Befehls- und Steuereinheit (K) angesteuert und kontrolliert werden:
- bei einer Verringerung oder Aussetzung der Produktionsleistung der zweiten Maschine (M2) verlagern die zweiten Handhabungsorgane die Artikel (2) von der ersten Fördererlinie (L1) auf entsprechende Plattformen (21) des Pufferförderers (20); und
- nach einer Steigerung oder Wiederaufnahme der normalen Produktionsleistung der zweiten Maschine (M2) und in Phasenbeziehung sowohl zur Aktivierung der ersten Handhabungsorgane (40) als auch zur Steigerung der Geschwindigkeit der zweiten Fördererlinie (L2) nehmen zweite Handhabungsorgane die Artikel (2) in einer vorbestimmten Reihenfolge von den Plattformen (21) auf, um die Artikel (2) in einem vorbestimmten Wechsel mit den Artikeln (2), die durch die ersten Handhabungsorgane (40) von der ersten Fördererlinie (L1) auf die zweite Fördererlinie (L2) übergeben werden, auf die zweite Fördererlinie (L2) auszugeben, bis der Pufferförderer (20) vollständig entleert ist.

2. Dynamisches Puffersystem nach Anspruch 1, **dadurch gekennzeichnet, dass** der Pufferförderer (20) zwei übereinander angeordnete Trume aufweist, jeweils ein Obertrum und ein Untertrum, wobei die Arbeitsstation (P) am Obertrum angeordnet ist.

3. Dynamisches Puffersystem nach Anspruch 2, **dadurch gekennzeichnet, dass** die Arbeitsstation (P) an einem Ende des Obertrums angeordnet ist.

4. Dynamisches Puffersystem nach Anspruch 1, **dadurch gekennzeichnet, dass** die Fördererlinien (L1, L2) in einer Linie ausgerichtet angeordnet sind und dass der Pufferförderer (20) zwei übereinander angeordnete Trume aufweist, jeweils ein Obertrum und ein Untertrum, die parallel zu den Fördererlinien (L1, L2) sind, wobei die Arbeitsstation (P) am Obertrum angeordnet ist.

5. Dynamisches Puffersystem nach Anspruch 1 oder 4, **dadurch gekennzeichnet, dass** die ersten Handhabungsorgane (40) zwischen einem Ende der ersten Fördererlinie (L1) und einem Anfang der zweiten Fördererlinie (L2) angeordnet sind.

6. Dynamisches Puffersystem nach einem der vorhergehenden Ansprüche, **dadurch gekennzeichnet, dass** die ersten Handhabungsorgane (40) mit den zweiten Handhabungsorganen übereinstimmen.

7. Dynamisches Puffersystem nach Anspruch 1, **dadurch gekennzeichnet, dass** der Pufferförderer (20) zwei Förderergruppen (25, 26) beinhaltet, die parallel zueinander sind und synchron in beiden Richtungen aktivierbar sind, und die an einander gegenüberliegenden Seiten (21A, 21B) der Plattformen (21) angeordnet sind, wobei diese Plattformen (21) jeweils mit einem Paar Zapfen (23) ausgestattet sind, die zueinander achsversetzt sind und von deren Seiten (21A, 21B) hervorstehen, und wobei diese Zapfen (23) dafür ausgelegt sind, mit entsprechenden Buchsen (24) in Eingriff zu treten, die in bestimmten Schritten entlang zwei flexiblen Übertragungsorganen (250, 260) angeordnet sind, die jeweils in den zwei Förderergruppen (25, 26) vorgesehen sind, wobei die flexiblen Übertragungsorgane (250, 260) horizontal um ein Maß (S) zueinander versetzt sind, das gleich dem Achsabstand (H) zwischen den Zapfen (23) ist, um es zu ermöglichten, die horizontale Ausrichtung der Plattformen (21) über die gesamte Ausdehnung des Pufferförderers (20) beizubehalten, einschließlich den kurvenförmigen Verbindungsabschnitten zwischen dessen jeweiligen horizontalen Ober- und Untertrumen.

## Revendications

1. Un système de tampon dynamique comprenant:
- une première ligne de transport (L1) pour transporter des articles (2) alimentés par une première machine (M1);
- une deuxième ligne de transport (L2) pour alimenter une deuxième machine (M2) avec les articles (2);
- une unité de commande et de contrôle (K) pour gérer les organes de motorisation des deux lignes de transport (L1, L2); et
- un tampon dynamique (1) associé aux deux lignes de transport (L1, L2);
où le tampon dynamique (1) comprend:
- un transporteur tampon (20) consistant en une pluralité de plateformes (21) disposées en séquence le long d'une trajectoire en boucle fermée, chacune des plateformes (21) étant destinée à recevoir au moins un article (2) ;
- des premiers organes de manipulation (40) commandés et contrôlés par l'unité de commande et de contrôle (K) de manière à transférer cycliquement les articles (2) de la première ligne de transport (L1) à la deuxième ligne de transport (L2) ;
- des deuxièmes organes de manipulation, commandés et contrôlés par l'unité de commande et de contrôle (K), agissant entre une station opérationnelle (P) dans laquelle transitent les plateformes (21) du transporteur tampon (20) ainsi que l'une ou l'autre des lignes (L1, L2), où les deuxièmes organes de manipulation coïncident optionnellement avec les premiers organes de manipulation (40) ;
où l'unité de commande et de contrôle (K) gère les organes de motorisation des lignes de transport (L1, L2), l'activation de l'organe de motorisation du transporteur tampon (20) et l'activation des premiers et deuxièmes organes de manipulation en fonction de conditions opérationnelles des machines (M1, M2) ;
**caractérisé en ce que** les deuxièmes organes de manipulation sont de type pick-and-place et **en ce que** les opérations suivantes sont commandées et contrôlées par l'unité de commande et de contrôle (6) ;
- lors d'une diminution ou d'un arrêt de la productivité de la deuxième machine (M2), les deuxièmes organes de manipulation transfèrent les articles (2) de la première ligne de transport (L1) à des plateformes (21) correspondantes du transporteur tampon (20) ; et
- dès que la productivité de la deuxième machine (M2) a augmenté ou s'est rétablie, et en relation de phase à la fois avec une activation des premiers organes de manipulation (40) et avec une augmentation de vitesse de la deuxième ligne de transport (L2), les deuxièmes organes de manipulation prélèvent les articles (2) des plateformes (21) dans un ordre prédéfini de manière à placer lesdits articles (2) dans la deuxième ligne de transport (L2) selon une alternance prédéfinie avec les articles (2) transférés de la première ligne de transport (L1) à la deuxième ligne de transport (L2) par les premiers organes de manipulation (40), jusqu'à ce que le transporteur tampon (20) soit complètement vidé.

2. Le système de tampon dynamique selon la revendication 1, **caractérisé en ce que** le transporteur tampon (20) présente deux branches superposées, respectivement une branche supérieure et une branche inférieure, avec la station opérationnelle (P) située au niveau de la branche supérieure.

3. Le système de tampon dynamique selon la revendication 2, **caractérisé en ce que** la station opérationnelle (P) est située au niveau d'une extrémité de la branche supérieure.

4. Le système de tampon dynamique selon la revendication 1, **caractérisé en ce que** les lignes de transport (L1, L2) sont disposées alignées et **en ce que** le transporteur tampon (20) présente deux branches superposées, respectivement une branche supérieure et une branche inférieure, qui sont parallèles aux lignes de transport (L1, L2) et avec la station opérationnelle (P) située au niveau de la branche supérieure.

5. Le système de tampon dynamique selon la revendication 1 ou 4, **caractérisé en ce que** les premiers organes de manipulation (40) sont interposés entre une extrémité finale de la première ligne de transport (L1) et une extrémité initiale de la deuxième ligne de transport (L2).

6. Le système de tampon dynamique selon l'une quelconque des revendications précédentes, **caractérisé en ce que** les premiers organes de manipulation (40) coïncident avec les deuxièmes organes de manipulation.

7. Le système de tampon dynamique selon la revendication 1, **caractérisé en ce que** le transporteur tampon (20) comprend deux groupes de transport (25, 26) qui sont parallèles et activables de façon synchronisée dans deux directions, et qui sont positionnés au niveau de côtés opposés (21A, 21B) des plateformes (21), lesdites plateformes (21) étant chacune dotées d'une paire de goupilles (23) disposées décalées et en saillie par rapport aux côtés (21A, 21B) eux-mêmes, et lesdites goupilles (23) pouvant venir en prise dans des douilles (24) correspondantes disposées par pas le long de deux organes de transmission flexibles (250, 260) respectivement prévus dans les deux groupes de transport (25, 26), lesdits organes de transmission flexibles (250, 260) étant horizontalement décalés d'une quantité (S) qui est égale à un entraxe (H) entre les goupilles (23), de manière à maintenir inchangée l'assiette horizontale des plateformes (21) sur tout le développement du transporteur tampon (20), y compris sur les tronçons courbes de raccordement entre les branches horizontales supérieure et inférieure correspondantes de celui-ci.
